Europäisches Patentamt

European Patent Office

Office européen des brevets

(19)

(11) Numéro de publication: **0 071 555**
**B1**

(12) # FASCICULE DE BREVET EUROPEEN

(45) Date de publication du fascicule du brevet:
19.03.86

(51) Int. Cl.⁴: **A 01 F 25/20**

(21) Numéro de dépôt: 82440021.2

(22) Date de dépôt: 16.07.82

(54) Machine pour le prélèvement de blocs de fourrage dans un silo.

(30) Priorité: 23.07.81 FR 8114512

(43) Date de publication de la demande:
09.02.83 Bulletin 83/6

(45) Mention de la délivrance du brevet:
19.03.86 Bulletin 86/12

(84) Etats contractants désignés:
AT BE DE GB IT NL SE

(56) Documents cités:
AU - B - 30 451
FR - A - 851 733
FR - A - 1 443 252
FR - A - 2 159 212
FR - A - 2 187 242
GB - A - 1 518 595

(73) Titulaire: KUHN S.A., 4, Impasse des Fabriques,
F-67700 Saverne (FR)

(72) Inventeur: Oberle, Edmond, 10a, rue des Capucines,
F-67700 Saverne (FR)
Inventeur: Wattron, Bernard, 150, rue Principale
Schwenheim, F-67440 Marmoutier (FR)
Inventeur: Hironimus, Jeannot, 14, rue des Pères,
F-67700 Saverne (FR)

(74) Mandataire: Andres, Jean-Claude, KUHN S.A. 4, Impasse
des Fabriques, F-67700 Saverne (FR)

LIBER, STOCKHOLM 1986

## Description

La présente invention concerne une machine pour le prélèvement de blocs de fourrage dans un silo horizontal. Elle comporte notamment un châssis sensiblement vertical pourvu à sa partie inférieure de dents s'étendant dans un plan sensiblement horizontal et, à une certaine distance au-dessus de ces dents, d'un bras sensiblement parallèle au plan desdites dents, lequel bras porte à son extrémite extérieure un dispositif de coupe et est articulé à son autre extrémité autour d'un axe sensiblement vertical.

Sur une machine de ce genre, décrite dans le brevet FR-A-2.187.242, le bras portant le dispositif de coupe est articulé sur une colonne verticale. Durant le prélévement il pivote autour de cette colonne de sorte que l'outil de coupe décrit un arc de cercle et découpe un bloc de forme demicirculaire dans la masse de fourrage. Le front de coupe ainsi obtenu n'est pas droit mais présente des encoches arrondies, ce qui empêche la découpe de blocs de volume complet lors des prélévements suivants. En sus, par suite de la forme de ces encoches, le front de coupe présente une plus grande surface en contact avec l'air, ce qui engendre une fermentation plus importante.

En outre, ces blocs de fourrage decoupés ne sont pas stables du fait de leur forme. Ils peuvent facilement basculer, ce qui peut provoquer une désagrégation pouvant entrainer d'importantes pertes.

Il n'est également pratiquement pas possible d'extraire complétement le fourrage du silo car, par suite de la forme de découpage demicirculaire, une partie du fourrage qui est prés des parois du silo n'est pas évacuée. Ce fourrage doit éventuellement être enlevé manuellement.

Sur une autre machine de ce genre, décrite dans le brevet GB-A-1.518.595, le bras portant le dispositif de coupe est réalisé en deux parties télescopiques. La partie mobile qui porte le dispositif de coupe est guidée de sorte que l'outil de coupe est deplacé selon une trajectoire en forme de U. Ledit guidage est réalisé à partir d'une glissière horizontale qui commande l'allongement ou le raccourcissement du bras télescopique en fonction de la trajectoire du dispositif de coupe.

Cet agencement nécessite de nombreux ajustements qui rendent la réalisation extrêmement délicate. En sus, du fait de cette construction, le bras support est relativement peu rigide, ce qui peut entrainer des déviations au niveau du dispositif de coupe. Il faut également constamment veiller à la netteté et au bon graissage des surfaces coulissantes du bras support télescopique, afin d'éviter tout grippage durant le prélèvement d'un bloc de fourrage. Par ailleurs, la puissance nécessaire pour le déplacement de ce bras est très importante en raison du frottement entre les deux parties telescopiques.

Sur une autre machine décrite dans la demande de brevet EP-A-0041.445 (document appartenant à l'état de la technique défini selon l'article 54 (3) de la CBE), le bras support du dispositif de coupe est réalisé en deux parties articulées entre elles. La partie extérieure qui porte le dispositif de coupe est également guidée au moyen d'une glissière en forme de U. Ce guidage fait varier l'angle que forment les deux parties entre elles en vue d'éloigner ou de rapprocher le dispositif de coupe du châssis, afin de lui faire suivre une trajectoire en forme de U en vue du découpage de blocs rectangulaires.

Cet agencement nécessite également de nombreux ajustements pour réaliser le guidage à partir de la glissière. En sus, cette glissière est assez encombrante, ce qui empêche l'utilisation du dispositif pour la manutention de charges volumineuses. Enfin, les deux parties formant le bras sont très longues, ce qui augmente les risques de déformation de ce bras et de deviation du couteau.

La présente invention a pour but une machine pour le prelévement de blocs de fourrage dans un silo horizontal, telle que décrite dans l'introduction et ne comportant pas les inconvénients des exemples précités. Cette machine permet notamment le prélèvement de blocs de forme sensiblement rectangulaire, tout en conservant une très bonne rigidité au bras portant le dispositif de coupe.

A cet effet, sur la machine selon l'invention, le bras porteur du dispositif de coupe est articulé au niveau de l'axe sensiblement vertical sur au moins une manivelle, elle-même articulée par rapport au châssis au moyen d'un second axe sensiblement vertical et excentré par rapport au premier axe, la longueur du bras avec le dispositif de coupe est supérieure à celle de la manivelle et dans un rapport tel que la trajectoire du dispositif de coupe soit en forme de U et sensiblement rectangulaire, et il est prévu des moyens d'entrainement pour faire tourner le bras support du dispositif de coupe autour de son axe d'articulation avec la manivelle ainsi que des moyens pour faire tourner cette derniere autour de son axe d'articulation avec le châssis, la rotation du bras support s'effectuant dans le sens inverse du sens de rotation de la manivelle et, lesdits mouvements de rotation de la manivelle et du bras support étant synchronisés de telle sorte que la vitesse de rotation dudit bras sur son axe d'articulation soit égale à quatre tiers de la vitesse de rotation de la manivelle sur son axe d'articulation.

Grâce à ces caractéristiques, la position de la manivelle par rapport au bras support change lors de leur déplacement, ce qui entraine une variation de la distance du dispositif de coupe par rapport à l'axe d'articulation de la manivelle sur le châssis. Cela permet de décrire une trajectoire non circulaire sans nécessiter une glissière de guidage.

L'agencement conforme à l'invention permet de déplacer le dispositif de coupe selon une trajectoire sensiblement en forme de carré. En pratique cette trajectoire ne sera que partiellement utilisée en vue de la découpe de blocs de forme rectangulaire. Ladite partie utilisée correspond à peu près à la moitié de ladite trajectoire. Cette forme rectangulaire permet d'obtenir un front de coupe sensiblement droit et donc de prélever constamment des blocs de volume complet.

En sus, le bras support du dispositif de coupe peut être réalisé en une seule pièce. Celui-ci est donc très rigide et ne présente aucun risque de mauvais fonctionnement. Enfin, il n'y a pas lieu de prévoir un dispositif de guidage pour faire varier la longueur de ce bras support durant le prélèvement.

Selon une autre caractéristique de l'invention le dispositif de coupe est monté pivotant par rapport à son bras support et est orienté durant le déplacement de sorte que son ou ses couteaux demeurent constamment tangents à sa ou leur trajectoire. Cette orientation est avantageusement realisée au moyen d'une tringle qui est d'une part solidaire du dispositif de coupe, et d'autre part, guidée sur un galet se situant sensiblement sur le centre instantané de rotation du dispositif de coupe. Ledit galet est fixé sur un bras relié à la manivelle sur laquelle est articulé le bras support du dispositif de coupe.

Selon une variante de réalisation, cette tringle est parallèle à une droite normale à la trajectoire du ou des couteaux et passant par le centre instantané de rotation. Dans ce cas elle est d'une part articulée sur le bras support du dispositif de coupe et d'autre part, guidée sur un galet se situant sur une droite passant par les axes d'articulation de la manivelle et ledit centre instantané de rotation. Ce galet est également fixé sur un bras solidaire de la manivelle sur laquelle est articulé le bras support du dispositif de coupe. La liaison entre la tringle et le dispositif de coupe est réalisée au moyen d'une tige intermédiaire. Ces agencements permettent d'obtenir une orientation idéale pour une bonne coupe, même dans les parties arrondies de la trajectoire.

Selon une autre caractéristique de l'invention, la machine comporte un logement pour le ou les couteaux du dispositif de coupe, sur au moins un des côtés du châssis. Le ou les couteaux sont ainsi protégés et ne sont pas déformés par le fourrage lorsque la machine est poussée dans le silo pour en extraire un bloc. Ce logement assure également une protection vis-à-vis des personnes environnantes.

D'autres caractéristiques et avantages de l'invention ressortiront de la description ci-après, avec référence aux dessins annexés qui representent, à titre d'exemples non limitatifs, deux formes de réalisation de l'invention.

Dans ces dessins:
- La figure 1 représente une vue de côté d'un premier exemple de réalisation selon l'invention.
- La figure 2 représente une vue de dessus du premier exemple de réalisation,
- La figure 3 représente, à plus grande échelle, une coupe partielle du mécanisme d'entrainement du premier exemple de réalisation,
- La figure 4 représente une vue de dessus d'un second exemple de réalisation,
- La figure 5 représente, à plus grande échelle, une coupe partielle du mécanisme d'entrainement du second exemple de réalisation,
- La figure 6 représente une variante de réalisation des moyens pour l'orientation du dispositif de coupe.

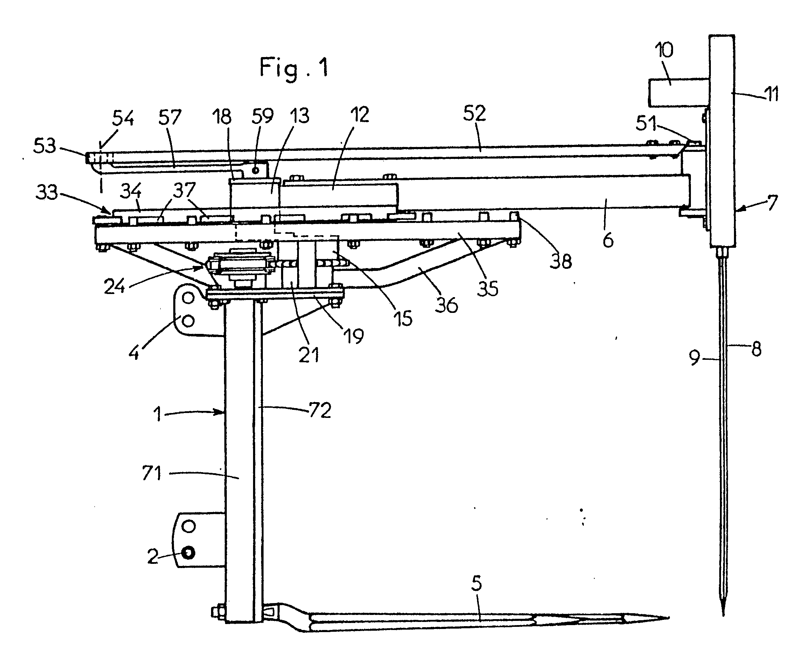

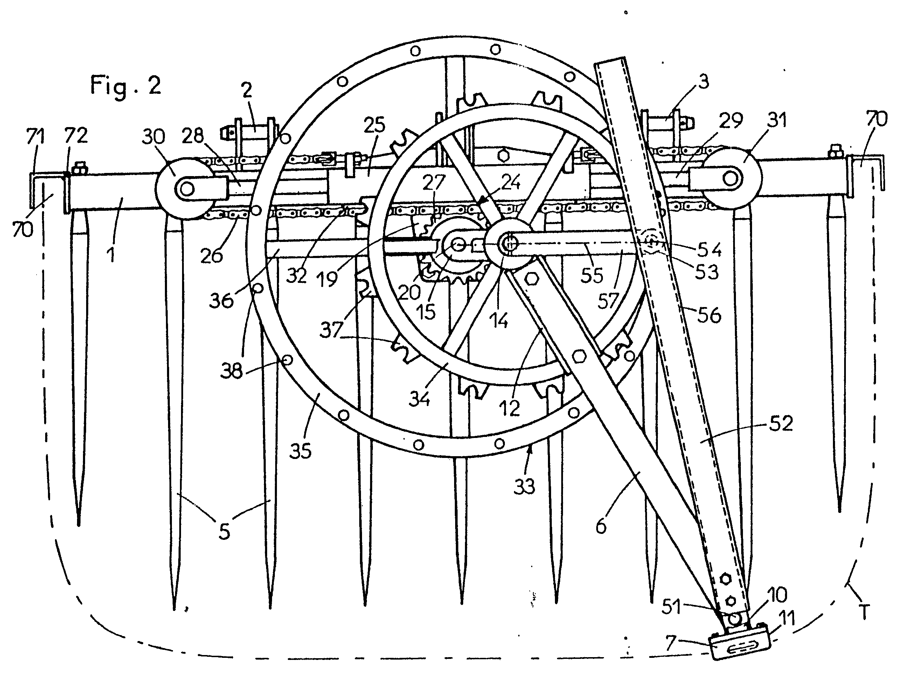

Telle qu'elle est représentée sur les figures 1 et 2, la machine selon l'invention comporte notamment un châssis (1) formant un cadre rigide. Ce châssis (1) comporte trois points d'accouplement pour l'attelage à un tracteur d'entraînement non représenté. Ces points d'attelage sont constitués par deux tourillons inférieurs (2 et 3) et une chape supérieure (4). Ledit châssis est également pourvu à sa partie inférieure de dents (5) qui s'étendent dans un plan sensiblement horizontal. A sa partie supérieure est prévu un bras (6) portant à son extrémite extérieure un dispositif de coupe (7). Celui-ci se compose essentiellement de deux couteaux parallèles (8 et 9) qui sont entraînés en un mouvement alternatif au moyen d'un moteur hydraulique (10) et d'excentriques logés dans un boîtier (11). Ces couteaux (8, 9) s'etendent verticalement, sensiblement jusqu'aux dents (5) prévues à la partie inférieure du châssis (1). Ces deux couteaux (8, 9) pourraient également être remplacés par un seul couteau entraîné de la même façon.

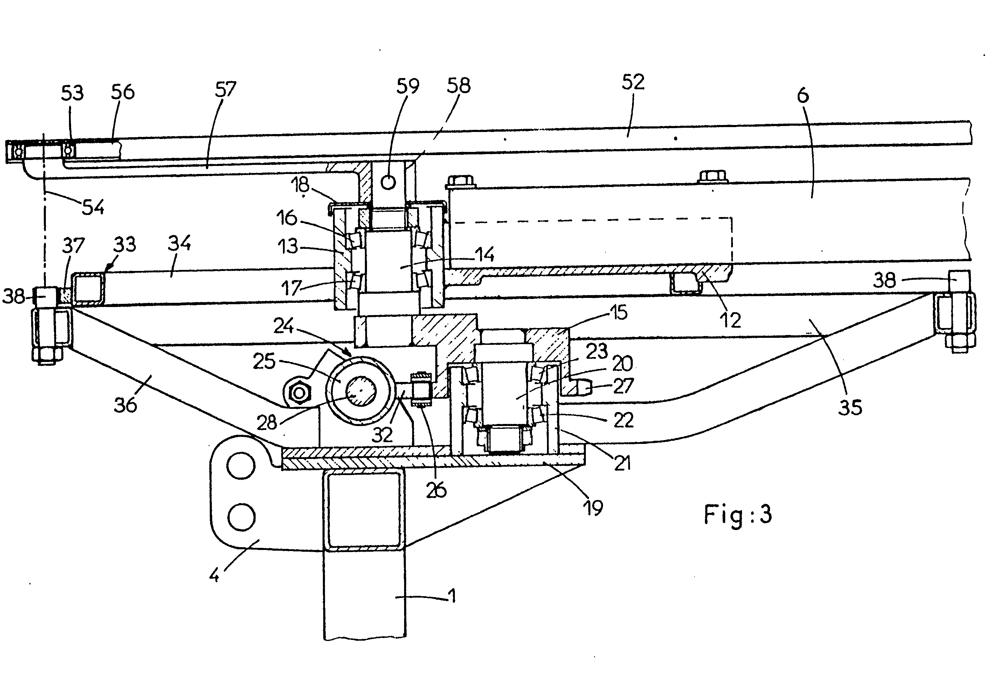

Comme cela ressort de la figure 3, ledit bras support (6) est vissé sur un manche (12) solidaire d'une douille (13). Par l'intermédiaire de cette douille (13), ce bras (6) est articulé sur un axe (14) sensiblement vertical d'une manivelle (15). A cet effet, deux roulements à rouleaux coniques (16, 17) sont prévus à l'intérieur de la douille (13). La partie supérieure de cette douille (13) est obturée au moyen d'un couvercle (18) qui empêche la pénétration de corps étrangers. Ladite manivelle (15) est elle-même articulée sur une plaque renforcée (19) solidaire du châssis (1), au moyen d'un second axe d'articulation (20) excentré par rapport au premier axe (14). Pour cela cette plaque (19) comporte une douille (21) dans laquelle est guidé ledit axe d'articulation (20) à l'aide de deux roulements à rouleaux coniques (22, 23).

Des moyens (24) sont prévus pour entrainer la manivelle (15) autour de son axe d'articulation (20) avec le châssis (1) lors de la découpe d'un bloc de fourrage. Dans les exemples représentés, ces moyens (24) consistent en un vérin hydraulique (25) à double effet qui actionne une chaîne (26) coopérant avec une couronne ou roue dentée (27) solidaire de la manivelle (15). Ledit vérin présente deux tiges (28, 29) portant chacune à son extrémité, un galet (30, 31) sur lequel passe la chaîne (26). Les deux extrémités de cette dernière sont reliées au corps du vérin (25) de sorte qu'elle entoure pratiquement ce dernier (figure 2). Ainsi, lorsqu'on fait se déplacer les tiges (28, 29) du verin (25) vers la droite ou vers la gauche, elles entraînent la chaîne (26). Celle-ci fait alors tourner la manivelle (15) autour de l'axe d'articulation (20), par suite de l'engrènement avec sa couronne ou roue dentée (27). Ledit engrènement est assuré au moyen d'un guide longitudinal (32) soudé sur le corps du vérin (25). D'autres moyens tels qu'un moteur hydraulique rotatif pourraient également être utilisés pour actionner la manivelle (15). Des moyens (33) sont prévus pour faire tourner le bras support (6) du dispositif de coupe (7) autour de l'axe d'articulation (14) avec la manivelle (15).

Une importante caractéristique de l'invention consiste en ce que le bras support (6) du dispositif de coupe (7) et la manivelle (15) sont entraînés de telle sorte que lorsque ledit bras support se déplace d'environ un demi-tour par rapport au châssis (1) pour la découpe d'un bloc, la manivelle (15) effectue au moins un tour complet autour de son axe d'articulation (20) par rapport au châssis (1). Grâce à cette caractéristique, dans certaines parties de la trajectoire du bras support (6) celui-ci s'étend au-dessus de la manivelle (15) alors que dans d'autres parties de cette trajectoire il s'étend dans le prolongement de la manivelle (15). Cela entraîne une variation de la distance du dispositif de coupe (7) par rapport à l'axe d'articulation (20) sur le châssis (1) en vue d'obtenir une trajectoire non circulaire.

Par ailleurs, ladite rotation du bras support (6) autour de l'axe d'articulation (14) s'effectue dans le sens inverse du sens de rotation de la manivelle (15) autour de son axe d'articulation (20) avec le châssis (1). En sus, les mouvements de rotation de la manivelle (15) et du bras support (6) sont synchronisés de telle sorte que lorsque ladite manivelle effectue trois tours complets autour de son axe (20) avec le châssis (1), le bras support (6) du dispositif de coupe (7) effectue quatre tours complets par rapport à son axe d'articulation (14) avec la manivelle (15), ce qui correspond à un tour complet du bras support (6) et du dispositif de coupe (7) par rapport au châssis (1). Grâce à cette synchronisation, le dispositif de coupe (7) se déplace selon une trajectoire (T) en forme de carré aux angles légèrement arrondis. En pratique seule environ la moitié de cette trajectoire (T) sera utilisée pour la découpe de blocs de fourrage de forme rectangulaire. Pour la découpe de tels blocs, le bras support (6) du dispositif de coupe (7) se déplacera donc d'environ un demi-tour par rapport au châssis (1).

Conformément au premier exemple de réalisation représenté sur les figures 1 à 3, lesdits seconds moyens (33) sont constitués par une couronne mobile (34) solidaire du bras support (6) du dispositif de coupe (7), laquelle couronne (34) coopère avec une seconde couronne (35) reliée au châssis (1) au moyen de rayons (36). La couronne mobile (34) est disposée à l'intérieur de la seconde couronne (35) concentriquement à l'axe d'articulation (14) du bras support (6). Cette seconde couronne (35) est fixe et est concentrique à l'axe d'articulation (20) de la manivelle (15) sur le châssis (1). La couronne mobile (34) comporte des crans (37) qui engrènent avec des plots (38) disposés sur la couronne fixe (35). Ces plots (38) et crans (37) matérialisent des dentures. Le nombre de plots (38) de la couronne fixe (35) est égal à quatre tiers du nombre de crans (37) prévus sur la couronne mobile (34). Dans l'exemple de la figure 2, les plots (38) sont au nombre de seize alors que la couronne mobile (34) comporte douze crans (37). Ainsi, lorsque la manivelle (15) est entraînée en rotation autour de l'axe d'articulation (20) avec le châssis (1), la couronne mobile (34) roule sur la couronne fixe (35). Elle fait alors tourner le bras support (6) du dispositif de coupe (7) autour de l'axe d'articulation (14) de telle sorte que ledit dispositif de coupe se déplace suivant la trajectoire (T) décrite précédemment.

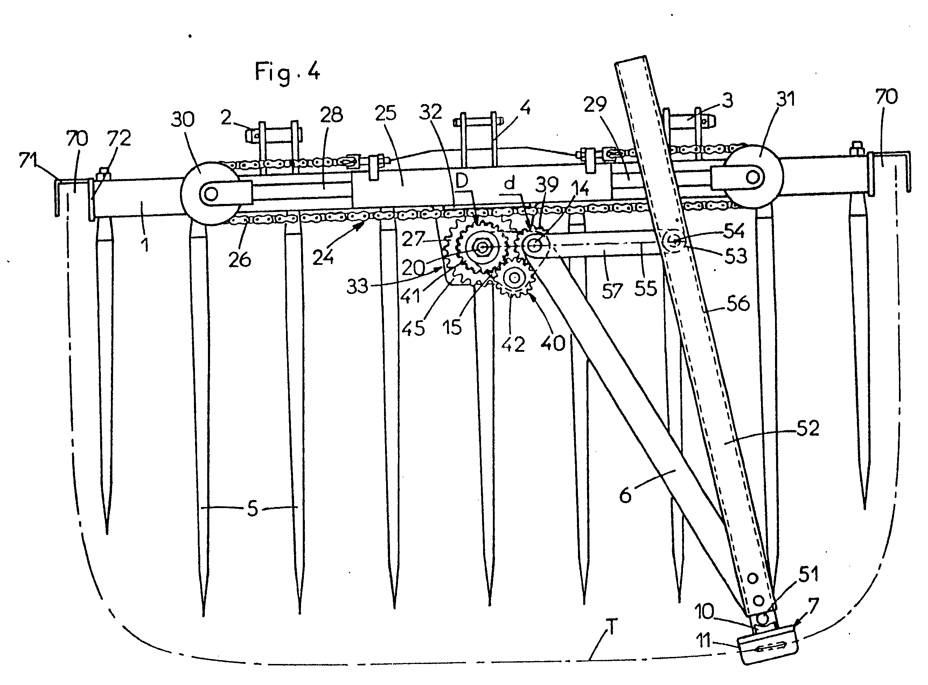

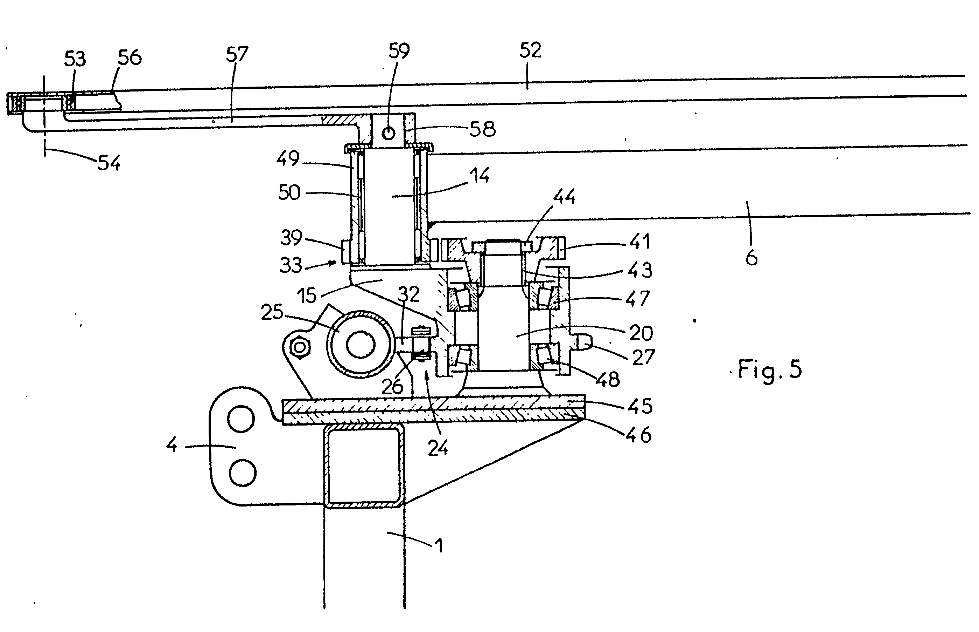

Dans le second exemple de réalisation représenté sur les figures 4 et 5, les seconds moyens (33) sont constitués par un pignon (39) solidaire du bras (6) portant le dispositif de coupe (7), lequel pignon coopère au moyen d'un élément intermédiaire (40) avec une roue dentée (41) fixe par rapport au châssis (1) de la machine. Cet élément intermédiaire assure l'inversion du sens de rotation du pignon (39) par rapport au sens de rotation de la manivelle (15). Dans l'exemple représenté, il est constitué par un pignon (42) situé sur la manivelle (15). Ledit élément pourrait également être constitué par un autre organe telle par exemple une chaîne passant sur le pignon (39) et la roue dentée (41). Cette roue dentée (41) est fixée concentriquement sur l'axe d'articulation (20) de la manivelle (15) sur le châssis (1), au moyen de cannelures (43) et d'un écrou (44). Tel que cela est représenté sur la figure 5, ledit axe d'articulation est solidaire d'une plaque (45) vissée sur une seconde plaque (46) solidaire du châssis (1). La manivelle (15) est guidée sur cet axe (20) au moyen de deux roulements à rouleaux coniques (47, 48). Le pignon (39) est concentrique à l'axe d'articulation (14) avec la manivelle (15). Il est prolongé vers le haut et forme une douille (49) à laquelle est rapporté le bras support (6). Le guidage de l'ensemble formé par le pignon (39), la douille (49) et le bras support (6) sur l'axe d'articulation (14) est réalisé au moyen d'une cage à aiguilles (50).

Dans ce mode de réalisation le diamètre primitif (D) de la roue dentée (41) est égal à quatre tiers du diamètre primitif (d) du pignon (39) solidaire du bras support (6). Ce rapport permet également une synchronisation entre les mouvements de rotation du bras support (6) et de la manivelle (15) de telle sorte que la trajectoire (T) du dispositif de coupe (7) soit conforme à celle décrite précédemment. Tout comme dans l'exemple de réalisation précédent, la rotation de la manivelle (15) autour de son axe d'articulation (20) sur le châssis (1) provoque la rotation du bras support (6) autour de son axe d'articulation (14), par suite de la coopération entre la roue dentée (41) et les deux pignons (39, 42).

Les moyens d'entraînement (33) décrits ci-dessus sont très peu encombrants. De ce fait, lorsque le bras (6) portant le dispositif de coupe (7) est amené dans une position sensiblement parallèle au chassis (1), le volume au-dessus des dents (5) est pratiquement totalement dégagé. La machine peut alors avantageusement être utilisée pour le transport de produits volumineux tels que des balles de fourrage.

Conformément à une autre caractéristique de l'invention, le dispositif de coupe (7) est orienté durant son déplacement de sorte que les couteaux (8, 9) demeurent constamment tangents à leur trajectoire (T). A cet effet, ledit dispositif est articulé au bras support (6) au moyen d'un axe sensiblement vertical (51). Selon l'exemple représenté sur les figures 1 à 5, le dispositif de coupe (7) comporte une tringle (52) qui est d'une part solidaire de son boîtier (11) et d'autre part, guidée sur un galet (53) situé sensiblement sur le centre instantané de rotation (54). Ledit centre de rotation se situe à chaque instant donné à l'intersection de la normale à la trajectoire (T) des couteaux (8, 9) et une droite (55) passant par les deux axes d'articulation (20 et 14) (voir figures 2 et 4). Cette tringle (52) s'étend perpendiculairement aux couteaux (8, 9) du dispositif de coupe (7) et comporte une rainure (56) dans laquelle est engagé le galet (53). Ce galet (53) est solidaire d'un bras (57) qui se déplace avec la manivelle (15). Comme cela est representé sur les figures 3 et 5, ce bras (57) est fixé à la partie supérieure de l'axe d'articulation (14) qui est lui-même solidaire de la manivelle (15). Pour cette fixation ledit axe (14) est prolongé à travers le couvercle (18) et pénètre dans un alésage (58) du bras (57). La liaison mécanique entre cet axe (14) et le bras (57) est assurée au moyen d'une goupille (59).

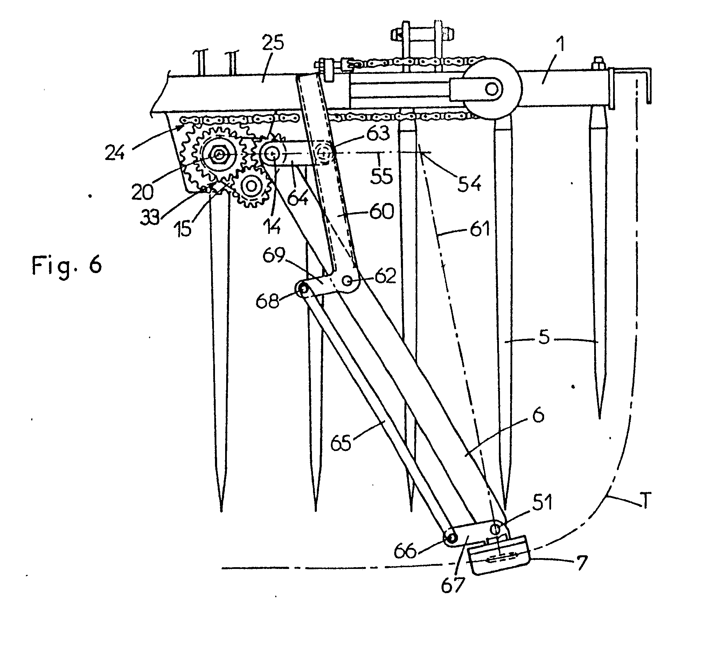

Dans la variante de réalisation representée sur la figure 6, seuls les moyens utilisés pour l'orientation du dispositif de coupe (7) changent. Cette orientation est réalisée au moyen d'une tringle (60) parallèle à une droite (61) normale à la trajectoire (T) des couteaux (8, 9) et passant par le centre instantane de rotation (54). Ladite tringle est d'une part articulée sur le bras support (6) au moyen d'un axe d'articulation (62) et d'autre part, guidée sur un galet (63) se situant sur une droite (55) passant par les axes d'articulation (20 et 14) et ledit centre instantané de rotation (54). Ce galet (63) est également fixé sur un bras (64) monté comme dans l'exemple précédent sur l'axe d'articulation (14) du bras support (6) avec la manivelle (15). La liaison entre la tringle (60) et le dispositif de coupe (7) est réalisée au moyen d'une tige intermédiaire (65). Celle-ci est articulée à l'une de ses extrémités sur un axe (66) d'une patte (67) solidaire du dispositif de coupe (7) et, à son autre extrémité, sur un axe (68) d'une patte (69) solidaire de la tringle (60). Les axes d'articulation (62, 66, 68 et 51) sont de préférence disposés suivant un parallélogramme. Cet agencement permet de réduire l'encombrement des moyens nécessaires pour l'orientation du dispositif de coupe (7).

Dans ces deux exemples de réalisation, la tringle (52, 60) fait pivoter le dispositif de coupe (7) autour de l'axe d'articulation (51) de sorte que les couteaux (8, 9) restent constamment parallèles à leur direction d'avance, c'est-à-dire tangents à leur trajectoire (T). Cela résulte du fait que le galet (53, 63) déplace la tringle (52, 60) en fonction de la position du centre instantané de rotation (54) autour de l'axe d'articulation (20). Grâce à cette caractéristique on obtient une bonne coupe et les couteaux (8, 9) nécessitent une puissance minimale pour leur déplacement dans le fourrage. En sus, cette caractéristique réduit le talonnage des couteaux (8, 9) dans les parties courbes de la trajectoire (T).

De chaque côté du châssis (1) est prévu un logement (70) pour les couteaux (8, 9). Chaque logement (70) est formé par un écran (71) en forme de cornière qui s'étend parallèlement au montant correspondant (72) du châssis (1) et par ledit montant. Ces couteaux (8, 9) sont ainsi protégés contre les chocs et ne sont pas déformés par la masse du fourrage ensilé lorsque la machine est poussée dans le silo en vue de l'extraction d'un bloc. Ils commencent ainsi la coupe à partir d'une position droite, ce qui évite des déviations durant leur déplacement. Ces logements (70) assurent également une protection vis-à-vis des personnes environnantes lorsque la machine n'est pas en service.

Pour l'extraction d'un bloc de fourrage le dispositif conforme à l'invention est accouplé à un tracteur. A l'aide de ce dernier les dents (5) de la partie inférieure du châssis (1) sont enfoncées dans le fourrage. Les deux couteaux (8, 9) sont alors entraînés au moyen du moteur hydraulique (10) et déplacés à l'aide du bras support (6) suivant la trajectoire (T), en vue du découpage d'un bloc de fourrage ayant une forme sensiblement rectangulaire. Lesdits couteaux (8, 9) possèdent avantageusement deux tranchants afin de pouvoir travailler aussi bien de la droite vers la gauche qu'inversement.

Le bloc de fourrage découpé peut alors être retiré du silo et transporté jusqu'au lieu d'affouragement où il peut être distribué immédiatemment ou être entreposé tel quel pendant plusieurs jours. La machine selon l'invention peut également être équipée d'un dispositif de déchiquetage et de distribution.

**Revendications**

1. Machine pour le prélèvement de blocs de fourrage dans un silo horizontal, comportant notamment un châssis (1) sensiblement vertical qui est pourvu à sa partie inférieure de dents (5) s'étendant dans un plan sensiblement horizontal et, à une certaine distance audessus de ces dents (5), d'un bras (6) sensiblement parallèle au plan desdites dents (5), lequel bras (6) porte a son extrémité extérieure un dispositif de coupe (7) et est articulé à son autre extrémité autour d'un axe (14) sensiblement vertical, caractérisée en ce que le bras (6) est articulé au niveau de l'axe (14) sur au moins une manivelle (15) elle-même articulée par rapport au châssis (1) au moyen d'un second axe (20) sensiblement vertical et excentré par rapport au premier axe (14) et en ce que la longueur du bras (6) avec le dispositif de coupe (7) est supérieure à celle de la manivelle (15) et dans un rapport tel que la trajectoire (T) du dispositif de coupe (7) soit en forme de U et sensiblerment rectangulaire, ladite machine comportant des moyens (24) pour faire tourner cette manivelle (15) autour de son axe d'articulation (20) et des moyens (33) pour faire tourner le bras support (6) du dispositif de coupe (7) autour de son axe d'articulation (14) dans le sens inverse du sens de rotation de la manivelle (15) autour de l'axe d'articulation (20), lesdits mouvements de rotation de la manivelle (15) et du bras support (6) étant synchronisés de telle sorte que la vitesse de rotation dudit bras (6) sur son axe (14) soit égale à quatre tiers de la vitesse de rotation de la manivelle (15) sur son axe (20).

2. Machine selon la revendication 1, caractérisée par le fait que lesdits moyens (33) sont constitués par une couronne mobile (34) solidaire du bras (6) portant le dispositif de coupe (7), laquelle couronne coopère avec une seconde couronne (35) disposée sur le châssis (1).

3. Machine selon la revendication 2, caractérisée par le fait que la couronne mobile (34) est disposée à l'interieur de la seconde couronne (35), concentriquement à l'axe d'articulation (14) du bras support (6).

4. Machine selon la revendication 2 ou 3, caractérisée par le fait que la seconde couronne (35) est fixe.

5. Machine selon l'une quelconque des revendications 2 à 4, caractérisée par le fait que la seconde couronne (35) est concentrique à l'axe d'articulation (20) de la manivelle (15) sur le châssis (1).

6. Machine selon l'une quelconque des revendications 2 à 5, caractérisée par le fait que la couronne mobile (34) comporte des crans (37) qui engrènent avec des plots (36) disposés sur la couronne fixe (35).

7. Machine selon la revendication 6, caractérisée par le fait que le nombre de plots (36) de la couronne fixe (35) est égal à quatre tiers du nombre de crans (37) prévus sur la couronne mobile (34).

8. Machine selon la revendication 1, caractérisée par le fait que lesdits moyens (33) sont constitués par un pignon (39) solidaire du bras (6) portant le dispositif de coupe (7), lequel pignon coopère au moyen d'un élement intermédiaire (40) avec une roue dentée (41) fixe par rapport au châssis (1) de la machine.

9. Machine selon la revendication 8, caractérisée par le fait que l'élément intermédiaire (40) est constitué par un pignon (42) disposé sur la manivelle (15).

10. Machine selon la revendication 8, caractérisée par le fait que l'élément intermédiaire (40) est constitué par une chaîne passant sur le pignon (39) et la roue dentée (41).

11. Machine selon la revendication 8, caractérisée par le fait que la roue dentée (41) est fixe.

12. Machine selon la revendication 8 ou 11, caractérisée par le fait que la roue dentée (41) est concentrique à l'axe d'articulation (20) de la manivelle (15) sur le châssis (1).

13. Machine selon la revendication 8, caractérisée par le fait que le pignon (39) solidaire du bras support (6) est concentrique à l'axe d'articulation (14) de ce dernier avec la manivelle (15).

14. Machine selon l'une quelconque des revendications 8 ou 11 à 13, caractérisée par le fait que le diamètre primitif (D) de la roue dentée fixe (41) est egal à quatre tiers du diamètre primitif (d) du pignon (39) solidaire du bras support (6).

15. Machine selon l'une quelconque des revendications précédentes et sur laquelle le dispositif de coupe (7) est orienté durant le déplacement autour d'un axe d'articulation (51) prévu sur le bras support (6), de sorte que les couteaux (8, 9) demeurent constamment tangents à leur trajectoire, caractérisée par le fait qu'elle comprend une tringle (52) qui est d'une part solidaire du dispositif de coupe (7) et d'autre part, guidée sur un galet (53) situé sensiblement sur le centre instantané de rotation (54) du dispositif de coupe (7).

16. Machine selon la revendication 15,. caractérisée par le fait que la tringle (52) est dirigée perpendiculairement aux couteaux (8, 9) du dispositif de coupe (7).

17. Machine selon la revendication 15 ou 16, caractérisée par le fait que la tringle (52) comporte une rainure (56) dans laquelle est engagé le galet (53) situé sensiblement sur le centre instantané de rotation (54) du dispositif de coupe (7).

18. Machine selon la revendication 15 ou 17, caractérisée par le fait que le galet (53) est solidaire d'un bras (57) relié à la manivelle (15).

19. Machine selon l'une quelconque des revendications 1 à 14, sur laquelle le dispositif de coupe (7) est orienté durant le déplacement, autour d'un axe d'articulation (51) prévu sur le bras support (6), caractérisée par le fait qu'elle comprend une tringle (60) parallèle a une droite (61) normale à la trajectoire (T) des couteaux (8, 9) et passant par le centre instantané de rotation (54), cette tringle étant d'une part articulée sur le bras support (6) et reliée au dispositif de coupe (7) au moyen d'une tige intermédiaire (65) et d'autre part, guidée sur un galet (63) situé sur une droite (55) passant par les deux axes d'articulation (20 et 14) de la manivelle (15) et le centre instantané de rotation (54).

20. Machine selon la revendication 19, caractérisée par le fait que la tige intermédiaire est articulée à l'une de ses extrémités sur un axe d'articulation (68) solidaire d'une patte (69) de la tringle (60) et à son autre extrémité sur un axe d'articulation (66) solidaire d'une patte (67) du dispositif de coupe (7).

21. Machine selon la revendication 20, caractérisée par le fait que les axes d'articulation (66 et 68) de la tige intermédiaire (65), l'axe d'articulation (62) de la tringle (60) sur le bras support (6) et l'axe d'articulation (51) du dispositif de coupe (7) sur le bras support (6) sont disposés suivant un parallélogramme.

22. Machine selon la revendication 19, caractérisée par le fait que le galet (63) est fixé sur un bras (64) relié à la manivelle (15).

23. Machine selon l'une quelconque des revendications précédentes, caractérisée par le fait qu'elle comporte un logement (70) pour les couteaux (8, 9) sur au moins un des côtés du châssis (1).

24. Machine selon la revendication 23, caractérisée par le fait qu'elle comporte au moins un écran latéral (71) qui s'étend parallèlement à un des montants (72) du châssis (1).

Claims

1. Machine for removing blocks of forage from a horizontal silo, mainly made up of a substantially vertical frame (1) equipped on its lower part with tines (5) extending on a substantially horizontal plane and at a certain distance above these tines (5), an arm (6) substantially parallel to the plane of the said tines (5), this arm (6) having a cutting device (7) at its outer extremity and is articulated at its other extremity on a substantially vertical axe (14), characterized in that the arm (6) is articulated by the axe (14) on at least one handle (15) being articulated itself in respect to the frame (1) by means of a substantially vertical second axe (20) eccentric in respect to the first axe (14) and in that the length of the arm (6) with the cutting device (7) is greater than that of the handle (15) in such a ratio that the trajectory (T) of the cutting device (7) be in a U-shape and substantially rectangular, the said machine having means (24) to make this handle (15) turn around its articulation axe (20) and means (33) to turn the support arm (6) of the cutting device (7) around its articulation axe (14) in the opposite direction of the direction of rotation of the handle (15) around the articulation axe (20), the said movements of rotation of the handle (15) and of the support arm (6) being synchronized in such a way that the rotation speed of the said arm (6) on its axe (14) be equal to four thirds of the rotation speed of the handle (15) on its axe (20).

2. Machine as defined in claim 1, characterized in that the said means (33) are made up of a mobile crown (34) fixed to the arm (6) carrying the cutting device (7), which crown cooperates with a second crown (35) situated on the frame (1).

3. Machine as defined in claim 2, characterized in that the mobile crown (34) is situated on the inside of the second crown (35) concentrically to the articulation axe (14) of the support arm (6).

4. Machine as defined in claim 2 or 3, characterized in that the second crown (35) is stationary.

5. Machine as defined in any one of claims 2 to 4, characterized in that the second crown (35) is concentric to the articulation axe (20) of the handle (15) on the frame (1).

6. Machine as defined in any one of claims 2 to 5, characterized in that the mobile crown (34) has notches (37) which mesh with the studs (38) situated on the stationary crown (35).

7. Machine as defined in claim 6, characterized in that the number of studs (38) of the stationary crown (35) is equal to four thirds of the number of notches (37) on the mobile crown (34).

8. Machine as defined in claim 1, characterized in that the said means (33) are made up of a pinion (39) fixed to the arm (6) carrying the cutting device (7), which pinion cooperates by means of an intermediary element (40) with a gear wheel (41) stationary in respect to the frame (1) of the machine.

9. Machine as defined in claim 8, characterized in that the intermediary element (40) is made up of a pinion (42) situated on the handle (15).

10. Machine as defined in claim 8, characterized in that the intermediary element (40) is made up of a chain passing around the pinion (39) and the gear wheel (41).

11. Machine as defined in claim 8, characterized in that the gear wheel (41) is stationary.

12. Machine as defined in claim 8 or 11, characterized in that the gear wheel (41) is concentric to the articulation axe (20) of the handle (15) on the frame (1).

13. Machine as defined in claim 8, characterized in that the pinion (39) fixed to the support arm (6) is concentric to the articulation axe (14) of the support arm with the handle (15).

14. Machine as defined in any one of claims 8 or 11 to 13, characterized in that the pitch diameter D of the stationary gear wheel (41) is equal to four thirds of the pitch diameter (d) of the pinion (39) fixed to the support arm (6).

15. Machine as defined in any one of the preceding claims and on which the cutting device (7) when in motion, is orientated around an articulation axe (51) on the support arm (6), in such a way that the knives (8, 9) always remain tangent to their trajectory, characterized in that it comprises a rod (52) which on the one hand is fixed to the cutting device (7) and on the other hand directed by a guide wheel (53) situated substantially on the instantaneous center of rotation (54) of the cutting device (7).

16. Machine as defined in claim 15, characterized in that the rod (52) is perpendicularly directed to the knives (8, 9) of the cutting device (7).

17. Machine as defined in claim 15 or 16, characterized in that the rod (52) comprises a groove (56) in which is engaged the guide wheel (53) situated substantially on the instantaneous center of rotation (54) of the cutting device (7).

18. Machine as defined in claim 15 or 17, characterized in that the güide wheel (53) is fixed to an arm (57) attached to the handle (15).

19. Machine as defined in any one of claims 1 to 14, on which the cutting device (7), when in motion, is orientated around an articulation axe (51) on the support arm (6), characterized in that it comprises a rod (60) parallel to a straight line (61) normal to the trajectory (T) of the knives (8, 9) and passing through the instantaneous center of rotation (54), this rod being articulated on the support arm (6) and linked to the cutting device (7) by means of an intermediary stem (65) on the one hand, and on the other hand directed on a guide wheel (63) situated on a straight line (55) passing through the two articulation axes (20 and 14) of the handle (15) and the instantaneous center of rotation (54).

20. Machine as defined in claim 19, characterized in that the intermediary stem is articulated at one of its extremities on an articulation axe (68) fixed to a plate (69) of the rod (60) and at its other extremity on an articulation axe (66) fixed to a plate (67) of the cutting device (7).

21. Machine as defined in claim 20, characterized in that the articulation axes (66 and 68) of the intermediary stem (65), the articulation axe (62) of the rod (60) on the support arm (6) and the articulation axe (51) of the cutting device (7) on the support arm (6) are placed as a parallelogram.

22. Machine as defined in claim 19, characterized in that the guide wheel (63) is fitted on an arm (64) attached to the handle (15).

23. Machine as defined in any one of the preceding claims, characterized in that it comprises a housing (70) for the knives (8, 9) on at least one side of the frame (1).

24. Machine as defined in claim 23, characterized in that it comprises at least one side guard (71) which extends parallelly to one of the upright beams (72) of the frame (1).

**Patentansprüche**

1. Maschine zur Entnahme von Futterblöcken aus einem horizontalen Silo, die einen nahezu senkrechten Rahmen (1) aufweist, an welchem Gabelzinken (5) am unteren Teil angebracht sind, die sich in einer horizontalen Ebene erstrecken und, in gewissem Abstand oberhalb dieser Gabelzinken (5), ein Träger (6), der im wesentlichen parallel zu der Ebene der Gabelzinken (5) ist, welcher Träger (6) an seinem äusseren Ende eine Schneidvorrichtung (7) trägt und mit seinem anderen Ende an einer nahezu senkrechten Achse (14) angelenkt ist, dadurch gekennzeichnet, dass der Träger (6) durch die Achse (14) auf mindestens einer Kurbel (15) angelenkt ist, die gegenüber dem Rahmen (1) gelenkig angeordnet ist mittels einer zweiten Achse (20), die nahezu senkrecht steht und exzentriert ist gegenüber der ersten Achse (14) und, dass die Länge des Trägers (6) mit der Schneidvorrichtung (7) grösser ist als die Länge der Kurbel (15) und zwar in einem solchen Verhältnis, dass die Bewegungsbahn (T) der Schneidvorrichtung (7) U-förmig und nahezu rechteckig ist, wobei die Maschine Mittel (24) besitzt um die Kurbel (15) um ihre Schwenkachse (20) zu drehen und Mittel (33) um den Träger (6) der Schneidvorrichtung (7) um seine Schwenkachse (14) zu drehen in die der Drehrichtung der Kurbel (15) um die Schwenkachse (20) entgegengesetzte Richtung, wobei die Drehungen der Kurbel (15) und des Trägers (6) so synchronisiert sind, dass die Drehzahl des Trägers (6) um seine Achse (14) vier Drittel der Drehzahl der Kurbel (15) um seine Achse (20) beträgt.

2. Maschine nach Anspruch 1, dadurch gekennzeichnet, dass die Mittel (33) aus einer bewegbaren Krone (34) bestehen, die mit dem Träger (6) der Schneidvorrichtung (7) verbunden ist und die mit einer zweiten Krone (35) kooperiert, welche auf dem Rahmen (1) angebracht ist.

3. Maschine nach Anspruch 2, dadurch gekennzeichnet, dass die bewegbare Krone (34) sich innerhalb der zweiten Krone (35) befindet und konzentrisch ist mit der Schwenkachse (14) des Trägers (6).

4. Maschine nach Anspruch 2 oder 3, dadurch gekennzeichnet, dass die zweite Krone (35) standfest ist.

5. Maschine nach irgend einem der Ansprüche 2 bis 4, dadurch gekennzeichnet, dass die zweite Krone (35) konzentrisch ist mit der Schwenkachse (20) der Kurbel (15) auf dem Rahmen (1).

6. Maschine nach irgend einem der Ansprüche 2 bis 5, dadurch gekennzeichnet, dass die bewegbare Krone (34) Einbuchtungen (37) besitzt, die mit Stiften (38) in Eingriff stehen, die sich auf der standfesten Krone (35) befinden.

7. Maschine nach Anspruch 6, dadurch gekennzeichnet, dass die Zahl der Stifte (38) der standfesten Krone (35) vier Drittel der Zahl der Einbuchtungen der bewegbaren Krone (34) beträgt.

8. Maschine nach Anspruch 1, dadurch gekennzeichnet, dass die Mittel (33) aus einem Zahnrad (39) bestehen, das mit dem Träger (6) der Schneidvorrichtung verbunden ist, welches Zahnrad (39) durch ein Zwischenelement (40) mit einem Zahnrad (41) kooperiert, das standfest ist gegenüber dem Rahmen (1).

9. Maschine nach Anspruch 8, dadurch gekennzeichnet, dass das Zwischenelement (40) aus einem Zahnrad (42) besteht, das auf der Kurbel (15) angebracht ist.

10. Maschine nach Anspruch 8, dadurch gekennzeichnet, dass das Zwischenelement (40) aus einer Kette besteht, die um die Zahnräder (39) und (41) läuft.

11. Maschine nach Anspruch 8, dadurch gekennzeichnet, dass das Zahnrad (41) standfest ist.

12. Maschine nach Anspruch 8 oder 11, dadurch gakennzeichnet, dass das Zanhnrad (41) konzentrisch ist mit der Schwenkachse (20) der Kurbel (15) auf dem Rahmen (1).

13. Maschine nach Anspruch 8, dadurch gekennzeichnet, dass das Zahnrad (39) des Trägers (6) konzentrisch ist mit der Schwenkachse (14) des Trägers auf der Kurbel (15).

14. Maschine nach irgend einem der Ansprüche 8 oder 11 bis 13, dadurch gekennzeichnet, dass der Teilkreisdurchmesser (D) des standfesten Zahnrads (41) vier Drittel des Teilkreisdurchmessers (d) des an dem Träger (6) angebrachten Zahnrads (39), beträgt.

15. Maschine nach irgend einem der vorherstehenden Ansprüche, und auf welcher die Schneidvorrichtung (7) um eine auf dem Träger (6) vorgesehenen Schwenkachse (51) so orientiert wird während ihrer Bewegung, dass die Messer (8, 9) ständig tangent zu ihrer Bewegungsbahn stehen, dadurch gekennzeichnet, dass sie eine Stange (52) besitzt, die einerseits, mit der Schneidvorrichtung (7) verbunden ist, und andererseits, auf einer Rolle (53) geführt wird, die sich nahezu auf dem Pol (54) der Schneidvorrichtung (7) befindet.

16. Maschine nach Anspruch 15, dadurch gekennzeichnet, dass die Stange (52) senkrecht zu den Messern (8, 9) der Schneidvorrichtung (7) steht.

17. Maschine nach Anspruch 15 oder 16, dadurch gekennzeichnet, dass die Stange (52) eine Nut (56) aufweist in welcher die Rolle (53) läuft, die sich nahezu auf dem Pol (54) der Schneidvorrichtung (7) befindet.

18. Maschine nach Anspruch 15 oder 17, dadurch gekennzeichnet, dass die Rolle (53) auf einem Arm (57) befestigt ist, der mit der Kurbel (15) verbunden ist.

19. Maschine nach irgend einem der Ansprüche 1 bis 14, auf welcher die Schneidvorrichtung (7) um eine auf dem Träger (6) vorgesehene Schwenkachse (51) orientiert wird während ihrer Bewegung, dadurch gekennzeichnet, dass sie eine Stange (60) aufweist, die parallel zu einer geraden Linie (61) ausgerichtet ist, welche senkrecht zu der Bewegungsbahn (T) der Messer (8, 9) steht und durch den Pol (54) läuft, wobei die Stange (60) einesteils auf dem Träger (6) angelenkt ist und mit der Schneidvorrichtung (7) durch eine Zwischenstange (65) verbunden ist, und andernteils, auf einer Rolle (63) geführt ist, die sich auf einer geraden Linie (55) befindet, welche durch die zwei Schwenkachsen (20 und 14) der Kurbel (15) und durch den Pol (54) läuft.

20. Maschine nach Anspruch 19, dadurch gekennzeichnet, dass die Zwischenstange an einem seiner Enden auf einer Schwenkachse (68) einer Lasche (69) der Stange (60) und an seinem anderen Ende auf einer Schwenkachse (66) einer Lasche (67) der Schneidvorrichtung (7) angelenkt ist.

21. Maschine nach Anspruch 20, dadurch gekennzeichnet, dass die Schwenkachsen (66 und 68) der Zwischenstange (65), die Schwenkachse (62) der Stange (60) auf dem Träger (6) und die Schwenkachse (51) der Schneidvorrichtung (7) auf dem Träger (6) nach einem Parallelogramm angeordnet sind.

22. Maschine nach Anspruch 19, dadurch gekennzeichnet, dass die Rolle (63) auf einem Arm (64) befestigt ist, der mit der Kurbel (15) verbunden ist.

23. Maschine nach irgend einem der vorherstehenden Ansprüche, dadurch gekennzeichnet, dass sie ein Gehäuse (70) für die Messer (8, 9) auf mindestens einer der Seiten des Rahmens (1) aufweist.

24. Maschine nach Anspruch 23, dadurch gekennzeichnet, dass sie mindestens ein Seitenschild (71) besitzt, das sich parallel zu einem der Holme (72) des Rahmens (1) erstreckt.

## Fig. 1

Fig. 2

0 071 555

Fig:3

Fig. 4

7

Fig. 5

Fig. 6

0 071 555